# EUROPEAN PATENT APPLICATION

(11) **EP 4 760 502 A1**
(43) Date of publication of application: **17.06.2026**
(21) Application number: 24861673.2
(22) Date of filing: 11.07.2024
(51) Int. Cl.: G06F 9/455

(54) **METHOD FOR PROVIDING CONTAINER SERVICE, CONTAINER SYSTEM, AND RELATED APPARATUS**

(30) Priority: 04.09.2023 CN 202311132414; 30.11.2023 CN 202311653766
(71) Applicant: Huawei Cloud Computing Technologies Co., Ltd., Gui'an New District, Guizhou 550025 (CN)
(72) Inventor: WANG, Jianfeng, Guiyang, Guizhou 550025 (CN); LIU, Hougang, Guiyang, Guizhou 550025 (CN); ZHANG, Qian, Guiyang, Guizhou 550025 (CN); BAI, Yi, Guiyang, Guizhou 550025 (CN)
(74) Representative: Goddar, Heinz J.
(86) International application number: PCT/CN2024/105025
(87) International publication number: WO 2025/050828

(57) **Abstract**

This application discloses a method for providing a container service, a container system, and a related apparatus, relating to the field of container technologies. The method includes: The container system provides base images and a public image for users, creates a container by using the base image, and mounts the public image. The public image does not need to be downloaded, thereby reducing occupation on storage space of a node on which the container is located. In addition, the shared public image exists independently, thereby facilitating management and quick update or upgrade for the public image. Because the public image is mounted, simply updating the public image can quickly update the container created for the users. There is no need to download the public image, and the mount-based approach also makes container creation more efficiently.

## Description

This application claims priorities to Chinese Patent Application No. 202311132414.5, filed on September 4, 2023 and entitled "CONTAINER APPLICATION METHOD, CONTAINER SYSTEM, AND RELATED APPARATUS", and to Chinese Patent Application No. 202311653766.5, filed on November 30, 2023 and entitled "METHOD FOR PROVIDING CONTAINER SERVICE, CONTAINER SYSTEM, AND RELATED APPARATUS", both of which are incorporated herein by reference in their entireties.

### TECHNICAL FIELD

This application relates to the field of container technologies, and in particular, to a method for providing a container service, a container system, and a related apparatus.

### BACKGROUND

Currently, the Internet has been deeply integrated with traditional industries. In a rapidly changing market environment, service modes are constantly innovating, and application software in the Internet needs to be quickly iterated to meet new service requirements. Against this backdrop, a container technology (Docker) emerges, and deploying application software via containers has rapidly gained widespread adoption.

For example, the container technology is applied to distributed clusters. Each node in the distributed clusters may run a plurality of containers, and each container includes an independent container image. In this way, each node can simultaneously carry a plurality of applications, and the isolation among container images ensures that applications do not interfere with each other. The combination of the distributed cluster and the container technology offers a high-performance, more flexible, scalable, and manageable computing environment, to provide services for users in the computing environment. How to use the container technology to provide more efficient services for users is a currently concerned problem.

### SUMMARY

This application provides a method for providing a container service, a container system, and a related apparatus, which can improve difficulty in managing a container image, and provide a more efficient service for a user. The technical solutions are as follows.

According to a first aspect, a method for providing a container service is provided, and is applied to a container system. The container system provides a plurality of base images and a public image corresponding to the plurality of base images, the public image includes a common part of a plurality of preset images, the plurality of base images include non-common parts of the plurality of preset images, and each base image corresponds to one preset image. The method includes:
providing a container image selection interface, where the container image selection interface indicates a user to select, from the plurality of base images, a base image used to create a first container; receiving an identifier of a first base image selected by the user from the container image selection interface; and creating, based on the identifier of the first base image, the first container by using the first base image, and mounting the public image to the first container, where the first container is configured to provide a service for the user.

**In** this solution, the container system provides the base images and the public image for users, creates the container by using the base image, and mounts the public image. The public image does not need to be downloaded, thereby reducing occupation on storage space of a node on which the container is located. In addition, the shared public image exists independently, thereby facilitating management and quick update or upgrade for the public image. Because the public image is mounted, simply updating the public image can quickly update the container created for the users. There is no need to download the public image, and the mount-based approach also makes container creation more efficiently.

Optionally, the container system includes a distributed cluster, the method is applied to a management node in the distributed cluster, and the distributed cluster further includes a plurality of worker nodes. The creating, based on the identifier of the first base image, the first container by using the first base image includes: sending a container creation instruction to a first worker node, where the container creation instruction carries the identifier of the first base image, the container creation instruction instructs the first worker node to create, based on the identifier of the first base image, the first container on the first worker node by using the first base image, and the first worker node is one of the plurality of worker nodes.

Optionally, the plurality of base images and the public image are stored in a container image repository included in the distributed cluster. The container creation instruction further instructs, when the first worker node does not store the first base image, the first worker node to download the first base image from the container image repository based on the identifier of the first base image.

Optionally, the plurality of base images further include a user-defined image. In other words, the base images in the container system include both a base image provided by a container service provider and the user-defined image.

Optionally, the user has permission to modify a part or all of the plurality of base images. In other words, the user can download the part or all of the base images to a local device of the user for modification, and upload a modified base image to the container system.

The user-defined image includes a defined image obtained by the user by customizing and updating one or more base images, or further includes an original image created by the user.

Optionally, the method further includes: providing a container image download interface, where the container image download interface indicates the user to select, from the plurality of base images, a base image to be downloaded; receiving an identifier of a second base image selected by the user from the container image download interface; downloading the second base image to a local device of the user based on the identifier of the second base image; providing a container image creation interface, where the container image creation interface indicates the user to modify the second base image; and obtaining, from the container image creation interface, a third base image uploaded by the user, where the third base image is a base image obtained by the user by modifying the second base image. In other words, the user may download and modify the base image on the container image download interface and container image creation interface.

Optionally, the user does not have permission to modify the public image.

Optionally, the method further includes: providing a public image update interface, where the public image update interface indicates a container service developer to update the public image; and obtaining an updated public image from the public image update interface. In other words, the public image is managed and updated by the container service developer.

Optionally, the public image is stored in the container image repository, and the method further includes: replacing the public image stored in the container image repository with the updated public image. Because the public image is mounted to the container created for the user via mounting, after the public image is updated, the container created for the user is also updated synchronously. It can be learned that in this solution, all containers can be quickly updated by updating one public image. By contrast, in related technologies, if the common part of the plurality of preset images needs to be updated, the plurality of preset images need to be updated and released one by one, and a node that creates a container further needs to download an updated preset image, so that the container can be updated by using the updated preset image.

Optionally, the base image includes an operating system layer image and/or an engine layer image, and the public image includes a service layer image. In other words, because an operating system and an engine usually do not need to be frequently maintained and updated, the operating system layer image and the engine layer image may be used as base images. Because the service layer usually needs to be frequently maintained and updated, content of the service layer may be created as a public image.

The engine layer image includes an artificial intelligence (artificial intelligence, AI) engine layer image.

The public image includes one or more of a security hardening component, a remote access component, a website service component, a cloud service software development kit (software development kit, SDK), an encryption component, and a decryption component.

According to a second aspect, another method for providing a container service is provided. A container system provides a plurality of base images and a public image corresponding to the plurality of base images, the public image includes a common part of a plurality of preset images, the plurality of base images include non-common parts of the plurality of preset images, each base image corresponds to one preset image, the container system includes a distributed cluster, and the method is applied to a first worker node in the distributed cluster. The method includes:
receiving a container creation instruction, where the container creation instruction carries an identifier of a first base image, and the first base image is one of the plurality of base images; and creating, based on the identifier of the first base image, a first container by using the first base image, and mounting the public image to the first container, where the first container is configured to provide a service for a user.

In this solution, the container system provides the base images and the public image for users, creates the container by using the base image, and mounts the public image. The public image does not need to be downloaded, thereby reducing occupation on storage space of a node on which the container is located. In addition, the shared public image exists independently, thereby facilitating management and quick update or upgrade for the public image. Because the public image is mounted, simply updating the public image can quickly update the container created for the users. There is no need to download the public image, and the mount-based approach also makes container creation more efficiently.

Optionally, the user has permission to modify a part or all of the plurality of base images, and/or the user does not have permission to modify the public image.

Optionally, the method further includes: deleting a container image that meets an aging condition and that is on the first worker node. In other words, the worker node in this solution can further automatically clear an aged mirror, thereby reducing unnecessary storage space waste on the worker node.

The aging condition includes that a version of the container image is earlier than a reference version, and/or a difference between time at which the container image was last used and current time exceeds reference duration.

Optionally, the base image includes an operating system layer image and/or an engine layer image, and the public image includes a service layer image.

Optionally, the engine layer image includes an AI engine layer image.

According to a third aspect, an apparatus for providing a container service is provided. The apparatus for providing a container service has a function of implementing behavior of the method for providing a container service in the first aspect or the second aspect. The apparatus for providing a container service includes one or more modules, and the one or more modules are configured to implement the method for providing a container service provided in the first aspect or the second aspect.

According to a fourth aspect, a container system is provided. The container system is configured to implement the method for providing a container service provided in the first aspect or the second aspect.

According to a fifth aspect, a compute device is provided. The compute device includes a processor and a memory. The memory is configured to: store a program for performing the method for providing a container service provided in the first aspect or the second aspect, and store data used to implement the method for providing a container service provided in the first aspect or the second aspect. The processor is configured to execute the program stored in the memory. The compute device may further include a communication bus, and the communication bus is configured to establish a connection between the processor and the memory.

According to a sixth aspect, a compute device cluster is provided. The compute device cluster includes at least one compute device, and each compute device includes a processor and a memory. A processor of the at least one compute device is configured to execute instructions stored in a memory of the at least one compute device, to cause the compute device cluster to perform steps of the method for providing a container service provided in the first aspect or the second aspect

According to a seventh aspect, a computer-readable storage medium is provided. The computer-readable storage medium stores instructions; and when the instructions are run on a computer, the computer is caused to perform the method for providing a container service provided in the first aspect or the second aspect.

According to an eighth aspect, a computer program product including instructions is provided. When the computer program product runs on a computer, the computer is caused to perform steps of the method for providing a container service provided in the first aspect or the second aspect.

Technical effects obtained in the third aspect to the eighth aspect are similar to technical effects obtained by using corresponding technical means in the first aspect or the second aspect. Details are not described herein again.

The technical solutions provided in this application can have at least the following beneficial effects:

In this solution, the container system provides the base images and the public image for users, creates the container by using the base image, and mounts the public image. The public image does not need to be downloaded, thereby reducing occupation on the storage space of the node on which the container is located. In addition, the shared public image exists independently, thereby facilitating management and quick update or upgrade for the public image. Because the public image is mounted, simply updating the public image can quickly update the container created for the users. There is no need to download the public image, and the mount-based approach also makes container creation more efficiently.

### BRIEF DESCRIPTION OF DRAWINGS

FIG. 1 is an architecture diagram of a distributed cluster according to an embodiment of this application;
FIG. 2 is a flowchart of a method for providing a container service according to an embodiment of this application;
FIG. 3 is a diagram of a container image according to an embodiment of this application;
FIG. 4 is an architecture diagram of a container system according to an embodiment of this application;
FIG. 5 is a diagram of a structure of an apparatus for providing a container service according to an embodiment of this application;
FIG. 6 is a diagram of a structure of another apparatus for providing a container service according to an embodiment of this application;
FIG. 7 is a diagram of a structure of a compute device according to an embodiment of this application;
FIG. 8 is a diagram of a structure of a compute device cluster according to an embodiment of this application; and
FIG. 9 is a diagram of a structure of another compute device cluster according to an embodiment of this application.

### DESCRIPTION OF EMBODIMENTS

To make objectives, technical solutions, and advantages of embodiments of this application clearer, the following further describes implementations of this application in detail with reference to the accompanying drawings.

First, the background and implementation environment in embodiments of this application are described.

A container image is a lightweight, portable, and consistent deployment mode that accelerates development and delivery of cloud-native applications. The use of container image can create containers for users, allowing the users to perform tasks operate in the containers. For example, the container can provide a development environment for users, and the users can develop program code in the container. The development environment may be an AI development environment, and the container is configured to develop AI models, engines, or the like. For another example, the development environment is an application (application, APP) development environment, and the container is configured to develop various APPs. Certainly, the container may further provide other services or environments in addition to the development environment for users, allowing users to carry out any possible task in the container.

For example, the container provides an AI development environment. In AI scenarios, the container image greatly simplifies development, deployment, and management processes of AI models and engines. By using the container image, users (for example, developers) can package an application and its dependencies into a portable unit that can be deployed in any environment. Container images can provide a consistent running environment, thereby eliminating configuration issues and dependency conflicts caused by different environments. In addition, lightweight and quick startup capabilities of the container image cause application deployment and expansion to be more efficient in a cloud environment. Currently, comprehensive cloudification and containerization are actively promoted. A containerization solution mainly includes hosted container services, container orchestration tools, and container-related automation and management tools.

A distributed cluster is a powerful computational architecture. A distributed cluster includes a plurality of worker nodes. The plurality of worker nodes may include compute nodes centered on compute resources, or may include nodes centered on other resources. The worker node may have different names in different scenarios. This is not limited in embodiments of this application. For example, the plurality of worker nodes include a plurality of compute nodes. In some scenarios, the plurality of compute nodes are connected via a network, and provide high-performance and large-scale computational power for users through collaborative work. The distributed cluster distributes computing load to all compute nodes, thereby implementing parallel computing. Each compute node has independent computing capabilities and storage resources. Through mutual communication and collaboration, the compute nodes can effectively share data and tasks, accelerating a computational process.

The distributed cluster features scalability and high availability. The worker nodes in the cluster can be dynamically increased or decreased as required to flexibly adjust or allocate node resources to meet computing requirements of different scales and complexity. In addition, because the worker nodes in the cluster are independent of each other, when a worker node is faulty or fails, other worker nodes can still work properly, to ensure continuous availability of the entire cluster. In cloud computing scenarios, the distributed cluster can support large-scale data processing and analysis, accelerate machine learning, deep learning, and big model training, and provide real-time data processing and flexible and elastic computational power.

Currently, the container technology has been applied to distributed clusters. Each worker node in the distributed cluster can run a plurality of containers, and each container includes an independent container image. In this way, each node can simultaneously carry a plurality of applications, and the isolation among container images ensures that applications do not interfere with each other. The combination of he distributed cluster and the container technology offers a more flexible, scalable, and manageable computing environment. In other words, the distributed cluster provides a high-performance computing capability, and the container image simplifies deployment and management of applications, making it more convenient and reliable deploy and run the applications in the distributed cluster.

In related technologies of a distributed cluster architecture based on the container technology, a series of AI interactive development and training environments supporting containerization are provided, providing convenient and efficient services for AI application developers. These services provide container images of various types based on conditions such as an AI engine type, a driver version, or an operating system, for the AI application developers to perform selection based on respective service scenarios. Currently, a container management solution in the distributed cluster may be summarized as follows: Each worker node in the cluster directly pulls a corresponding container image from a container image repository based on a container image selected by the user, and creates a service container (the service container is referred to as a container for short in embodiments of this application) for the user based on the pulled container image.

However, a container service developer presets various types of container images (preset images for short below) in the container image repository, and the preset images are usually large. For example, based on survey data of some vendors, currently, a size of each preset image is greater than 30 GB. Each worker node in the distributed cluster needs to pull these preset images to create containers. As a result, a large amount of storage space of the distributed cluster is occupied by only the container images.

For example, it is assumed that one distributed cluster includes 200 worker nodes, each worker node needs to use 30 container images, and a size of each container image is 30 GB. In this case, storage space that is of the distributed cluster and that is occupied by the container images reaches 200*30*30 GB=180 TB. It can be learned that this occupies a large amount of storage space of the distributed cluster.

In addition, a container image management mode in current related technologies cannot quickly implement update and adjustment of a user-defined container image. Specifically, the user-defined container image usually needs to be built based on a preset image provided by a container cloud vendor service. However, a service-related part (for example, permission, security, or network access) of the preset image is directly integrated into the preset image, and cannot be updated or adjusted by the user. For example, it is assumed that security firmware in the preset image needs to be updated due to a cloud service security attack. In this case, after a cloud vendor updates each preset image, the user needs to re-pull an updated preset image, and then re-create, based on the re-pulled preset image, a defined image with updated security firmware. It can be learned that, when cloud service security is attacked, because the user-defined image is not a preset image in a system, the cloud vendor cannot modify or update the user-defined image. As a result, the security attack cannot be repaired timely.

In addition, in related technologies, because there are various types of preset images, management procedures such as creation, modification, testing, and release of a container image are complex. For example, in a distributed cluster, each worker node includes 30 container images, and the 30 container images include a same small file. In this case, even if only the small file is modified, where for example, the small file is security firmware and the security firmware is modified, at least 30 image release procedures need to be performed because each container image needs to be re-created and released. It can be learned that, this not only increases workload of development and operations and maintenance, but also may delay quick release of a new function or an updated function.

To resolve the foregoing problem, an embodiment of this application provides a method for providing a container service, which specifically includes a container management method, a container creation method, and the like. In this solution, a container system provides a plurality of base images and a public image corresponding to the plurality of base images. The public image includes a common part of a plurality of preset images, the plurality of base images include non-common parts of the plurality of preset images, and each base image corresponds to one preset image. In other words, the public image is a container image shared by the plurality of base images. To be specific, the public image in this solution includes the common part of the plurality of preset images in the related technology, and it may be considered that the public image is obtained by extracting the common part of the plurality of preset images. Using the public image can help container creation be more efficient, reduce occupation by container images on storage space of a node on which a container is located, and facilitates management and quick update and upgrade of the container image.

This solution may be applied to a distributed cluster, or may be applied to a single server or any other possible system architecture. A system architecture and a service scenario described in embodiments of this application are intended to describe the technical solutions in embodiments of this application more clearly, and do not constitute a limitation on the technical solutions provided in embodiments of this application. A person of ordinary skill in the art may be aware that: With evolution of the system architecture and emergence of new service scenarios, the technical solutions provided in embodiments of this application are also applicable to similar technical problems.

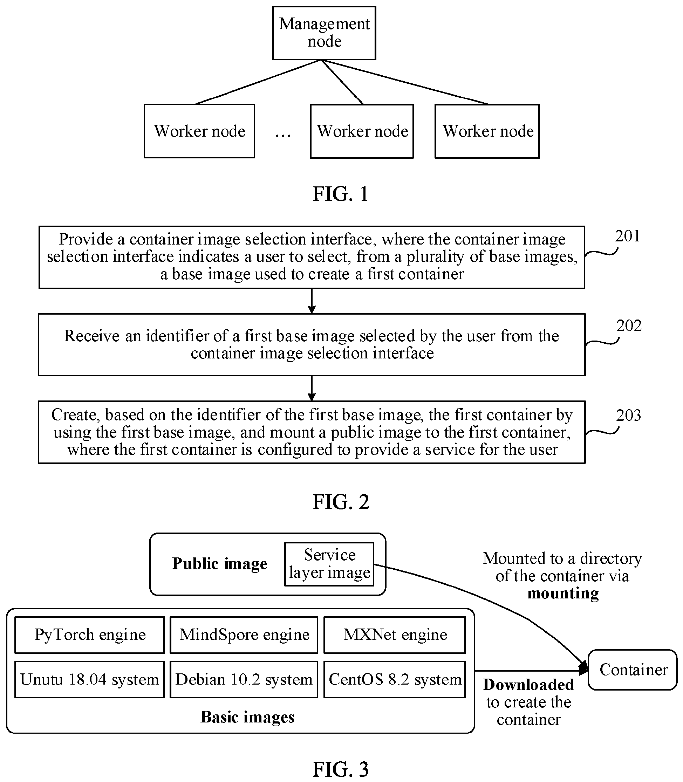

The distributed cluster is used as an example. FIG. 1 is a diagram of a structure of a distributed cluster according to an embodiment of this application. The distributed cluster may be a part or all of a container system. Refer to FIG. 1. The distributed cluster includes a plurality of worker nodes and one management node. The management node establishes wireless or wired communication connections to the plurality of worker nodes. Optionally, a wireless or wired communication connection is also established between the plurality of worker nodes.

The management node is configured to receive an identifier of a first base image selected by a user from a container image selection interface, where the container image selection interface indicates the user to select, from a plurality of base images, a base image used to create a first container. The management node is further configured to send a container creation instruction to a first worker node, where the container creation instruction carries the identifier of the first base image, and the container creation instruction instructs the first worker node to create, based on the identifier of the first base image, the first container on the first worker node by using the first base image. In other words, the first worker node is configured to: receive the container creation instruction of the management node, and create, based on the identifier of the first base image, the first container on the first worker node by using the first base image. For a specific implementation, refer to the following method embodiment in FIG. 2. The first worker node is one of the plurality of worker nodes.

Optionally, the management node and the plurality of worker nodes are devices independent of each other, or the management node and a second worker node belong to a same device, and the second worker node is one of the plurality of worker nodes.

Optionally, the distributed cluster further includes a scheduler, and the scheduler is configured to indicate the management node to allocate work to the plurality of worker nodes, for example, perform allocation for nodes for container creation and running. The scheduler may be an independent device. For example, the scheduler may be a control node. Alternatively, the scheduler is a module deployed on a control node, and the module may be implemented by using software, hardware, or a combination of software and hardware. Alternatively, the scheduler is a module deployed on the management node, and the module may be implemented by using software, hardware, or a combination of software and hardware. Certainly, the scheduler may alternatively be deployed on any worker node.

The following describes the method for providing a container service provided in embodiments of this application.

FIG. 2 is a flowchart of a method for providing a container service according to an embodiment of this application. The method is applied to a container system, and the container system may be the container system described above. To be specific, the container system provides a plurality of base images and a public image corresponding to the plurality of base images. The public image includes a common part of a plurality of preset images, and the plurality of base images include non-common parts of the plurality of preset images. Each base image corresponds to one preset image. Refer to FIG. 2. The method includes the following steps.

**Step 201:** Provide a container image selection interface, where the container image selection interface indicates a user to select, from the plurality of base images, a base image used to create a first container.

**In** embodiments of this application, the container system may be a cloud system, and the cloud system provides a container service. The container system may include a distributed cluster, and each worker node in the distributed cluster may be implemented by one or more servers. The container system may also include a single server, and the server may also be implemented by one or more servers.

The container system provides the container image selection interface for the user to select a base image required for creating a container. The base image may be a container image in a container image repository. For example, the base image is a container image preset in the container image repository. The container image repository further includes the public image, and the public image does not need to be selected by the user through the container image selection interface.

For example, the container image selection interface is presented on a local device of the user. The container image selection interface may display a name or another identifier of each of the plurality of base images, and may further display a related description of each base image, for example, a function description of the base image. The user may select at least one base image as required. A selection manner provided by the container image selection interface for the user may include a clicking manner, a ticking manner, or another manner.

Certainly, the container image selection interface may alternatively display prompt information of the plurality of base images. For example, the prompt information prompts the user to input a name or another identifier of the base image required for creating the first container. In other words, the container image selection interface may also support the user in selecting a base image in a manner of inputting an image name or another identifier.

It should be understood that the container image selection interface may support any one or more manners of selecting a base image. For example, the manner of clicking or ticking is supported, and the manner of inputting an image name by the user is also supported. This is not limited in embodiments of this application.

In some embodiments, the base image includes an operating system layer image and/or an engine layer image, and the public image includes a service layer image. In other words, in these embodiments, the base image is created based on an operating system and/or an engine, and the public image is created based on a service. In some other embodiments, the base image and the public image may alternatively be created based on another division requirement. This is not limited in embodiments of this application.

The operating system layer image includes operating system images of various types and versions. For example, as shown in FIG. 3, the operating system layer image includes an Unutu 18.04 system image, a Debian 10.2 system image, a CentOS 8.2 system image, or another system image.

The engine layer image includes engine images of various fields, types, and versions. For example, as shown in FIG. 3, in AI scenarios with the application of container technologies, the engine layer image includes an AI engine layer image, and the AI engine layer image is, for example, a PyTorch engine image, a MindSpore engine image, an MXNet engine image, or another engine image.

The public image may include a service-related image that is provided by container service developers or a third party. For example, the public image includes one or more of a security hardening component, a remote access component, a website service component, a cloud service software development kit (SDK), an encryption component, and a decryption component.

For example, in AI scenarios, an AI engine layer and an operating system layer generally have different content in different container images. This is usually determined by factors such as different AI engine types and operating system types. The most notable feature of the two layers is that the two layers do not need to be modified frequently. In other words, after a container image is pulled to a worker node, the two layers do not change and serve users for long-term use. By contrast, the service layer is usually integrated with service-related components of cloud vendors, such as remote access service (such as SSH), web service, a security hardening component, cloud service SDK, and encryption and decryption components. A prominent feature of the service layer is that all container images in related technologies include this part, and cloud vendors need to frequently modify and release this part with service evolution, for example, fix common security vulnerabilities of cloud services. Based on this, the base image in the AI scenarios may include the operating system layer image and the AI engine layer image, and the public image includes a service-related image.

**Step 202:** Receive an identifier of a first base image selected by the user from the container image selection interface.

For example, this solution is applied to the distributed cluster. The management node in the distributed cluster receives the identifier of the first base image selected by the user from the container image selection interface. For example, this solution is applied to a single server. The server obtains the identifier of the first base image from the container image selection interface. The first base image is the base image used to create the first container.

**Step 203:** Create, based on the identifier of the first base image, the first container by using the first base image, and mount the public image to the first container, where the first container is configured to provide a service for the user.

For example, this solution is applied to the distributed cluster. An implementation in which the management node creates, based on the identifier of the first base image, the first container by using the first base image is as follows: sending a container creation instruction to a first worker node, where the container creation instruction carries the identifier of the first base image, the container creation instruction instructs the first worker node to create, based on the identifier of the first base image, the first container on the first worker node by using the first base image, and the first worker node is one of the plurality of worker nodes. In other words, the first worker node obtains the identifier of the first base image from the container creation instruction of the management node, and creates, based on the identifier of the first base image, the first container on the first worker node by using the first base image.

Optionally, the first worker node is a worker node selected from the plurality of worker nodes. For example, the management node selects the first worker node from the plurality of worker nodes, or the distributed cluster further includes a control node, and the control node selects the first worker node from the plurality of worker nodes. The management node or the control node may select a worker node via a scheduler. A policy for selecting the worker node may be a load balance policy, a random selection policy, a sequential selection policy, or another policy. This is not limited in embodiments of this application.

The plurality of base images and the public image are stored in the container image repository included in the distributed cluster. The container creation instruction further instructs, when the first worker node does not store the first base image, the first worker node to download the first base image from the container image repository based on the identifier of the first base image. In other words, when the first worker node does not store the first base image, the first worker node needs to first download (or may be referred to as pull) the first base image from the container image repository based on the identifier of the first container image.

It should be understood that the container image repository may be implemented via a storage apparatus in the container system. The storage apparatus may be an independent storage device, that is, may exist independently, or may be integrated into a management node or another node in the distributed cluster, or may be integrated into the single server.

For example, the first base image includes an Unutu 18.04 system image. It is assumed that the first worker node does not store the Unutu 18.04 system image. In this case, the first worker node first downloads the Unutu 18.04 system image from the container image repository, and then creates the first container by using the Unutu 18.04 system image. The first container provides an Unutu operating system environment.

After creating the first container, the first worker node mounts the public image to the first container. The first worker node synchronizes a file included in the public image to a directory of the first container, to mount the public image to the first container.

It can be learned from the foregoing that, in this solution, the public image does not need to be downloaded, and compared with the preset image in the related technology, the base image does not have content of the public image, so that the base image is small. Therefore, occupation by container images on storage space of the worker node is reduced.

For example, the container image repository includes 30 base images. It is assumed that each worker node includes the 30 base images, and the 30 base images share one public image. In this case, compared with space in the related technology, storage space of 30 service layer images is saved for each worker node. If there are a large quantity of worker nodes in the distributed cluster, a large amount of storage space can be saved.

In addition, because the user usually has a requirement for customizing and modifying the operating system layer image and/or the engine layer image, decoupling of the operating system layer image and/or the engine layer image from the service layer image is implemented when the service layer image is separately managed. The service layer image is managed, maintained, and updated by the container service developer, and after a container is created by using a user-defined image, the service layer image is mounted to the container.

In addition, the plurality of base images usually do not need to be frequently updated and managed, and the container service developer only needs to manage and update the public image as required. In this way, management of the plurality of preset images in the related technology is simplified to management of one public image in this solution, that is, an image management procedure is simplified, thereby greatly reducing management difficulty, and improving image update and release efficiency.

Optionally, the plurality of base images further include the user-defined image. In other words, the base images in the container system include both a base image provided by a container service provider and the user-defined image. The following describes the user-defined image.

In embodiments of this application, the user has permission to modify a part or all of the plurality of base images. To be specific, the user can download the part or all of the base images to the local device of the user for modification, and upload a modified base image to the container system.

The container system further provides a container image download interface, and the container image download interface indicates the user to select, from the plurality of base images, a base image to be downloaded. A specific implementation is similar to a manner in which the user selects the first base image from the plurality of base images. Details are not described herein again.

After the user selects, through the container image download interface, the base image to be downloaded, the container system receives an identifier of a second base image selected by the user from the container image download interface, and downloads the second base image to the local device of the user based on the identifier of the second base image.

The container system further provides a container image creation interface, where the container image creation interface indicates the user to modify the second base image. The container system receives a third base image uploaded by the user from the container image creation interface, where the third base image is a base image obtained by the user by modifying the second base image. In other words, the user may modify the second base image to obtain the third base image, and upload the third base image.

Optionally, after obtaining the third base image, the container system stores the third base image in the container image repository.

For example, the method is applied to the distributed cluster. The management node in the distributed cluster receives the identifier of the second base image selected by the user on the container image download interface, and downloads the second base image to the local device of the user based on the identifier of the second base image. The management node receives the third base image uploaded by the user from the container image creation interface, and stores the third base image in the container image repository. For example, the method is applied to the single server. The server receives the identifier of the second base image selected by the user from the container image download interface, and downloads the second base image to the local device of the user based on the identifier of the second base image. The server receives the third base image uploaded by the user from the container image creation interface, and stores the third base image in the container image repository.

The third base image is a new-version image relative to the second base image. When storing the third base image in the container image repository, the container system obtains a storage address of the third base image, that is, an address of the third base image in the container image repository. The address of the third base image in the container image repository is similar to an address of the second base image in the container image repository. For example, address prefixes are the same, and image version numbers with address suffixes are different. A storage address of a base image is used to download the base image, for example, used by the worker node to download the base image, or used by the local device of the user to download the base image.

Optionally, the container image creation interface may further support the user in creating an image without referring to a base image in the container image repository. For example, the user creates an operating system image through the container image creation interface. In other words, the user-defined image includes a defined image obtained by the user by customizing and updating one or more base images, or further includes an original image created by the user.

Optionally, if the container system creates a second container for the user by using the second base image, after uploading the third base image, the user further triggers the container system to update the second container by using the third base image. In other words, modification and upload of the second base image by the user further trigger automatic update of the second container.

In some other embodiments, the user does not have permission to modify the plurality of base images. In other words, the container system does not support the user in modifying the plurality of base images provided by the container system for the user.

In embodiments of this application, the user does not have permission to modify the public image, and the public image is managed and updated by the container service developer. Certainly, in some other embodiments, the user may alternatively have permission to modify the public image. For example, some users with specified identities may also update the public image. The user with the specified identity is, for example, a user who cooperates with the container service provider, or some users who have succeeded in security authentication by the container service provider.

For example, the public image is managed and updated by the container service developer. The container system further provides a public image update interface. The public image update interface indicates the container service developer to update the public image, and obtain an updated public image from the public image update interface. In other words, the container service developer can manage and update the public image.

The update of the public image is usually to synchronously update containers created for users, or update a service provided by the public image in containers. Optionally, after obtaining the updated public image, the container system replaces the public image stored in the container image repository with the updated public image. The public image is mounted to the containers of the users via mounting. Therefore, an operation of updating the public image in the container image repository essentially means synchronously updating the containers to which the public image is mounted. It can be learned that, in this solution, content included in the public image can be quickly updated and released, and the preset images do not need to be modified one by one.

A manner of replacing the public image may be deleting the public image before the update, and storing the updated public image. In addition, an address of the public image before the update is the same as an address of the updated public image. Alternatively, a manner of replacing the public image is storing the updated public image, and retaining the public image before the update. An address of the updated public image may be different from an address of the updated public image, and the address of the updated public image may be used to mount the updated public image.

To avoid wasting storage space of the worker nodes, the container system can further delete a container image that meets an aging condition and that is on each worker node. The container system may delete the container image that meets the aging condition periodically, at scheduled time, or as triggered by an event. The event triggering includes triggering by an operation of the container service developer, triggering by an operation of an administrator, or triggering by another event. The plurality of worker nodes in the container system may delete the container image based on a same period or different periods, or delete the container image at same scheduled time or different scheduled time. An object of the event triggering may include one or more worker nodes. For example, the administrator may trigger, through an operation, deletion of a container image on the one or more worker nodes.

For example, the method is applied to the distributed cluster. Each worker node autonomously clears a container image that meets the aging condition and that is in container images stored on each worker node. For example, the first worker node deletes a container image that meets the aging condition and that is on the first worker node. Certainly, each worker node may alternatively delete, under an indication of the management node, the control node, or another device, a container image that meets the aging condition. This is not limited in embodiments of this application. For example, the method is applied to the single server. The server may autonomously clear a container image that meets the aging condition and that is in container images stored in the server.

The aging condition includes that a version of the container image is earlier than a reference version, and/or a difference between time at which the container image was last used and current time exceeds reference duration. Certainly, the aging condition may alternatively include another possible condition. This is not limited in embodiments of this application.

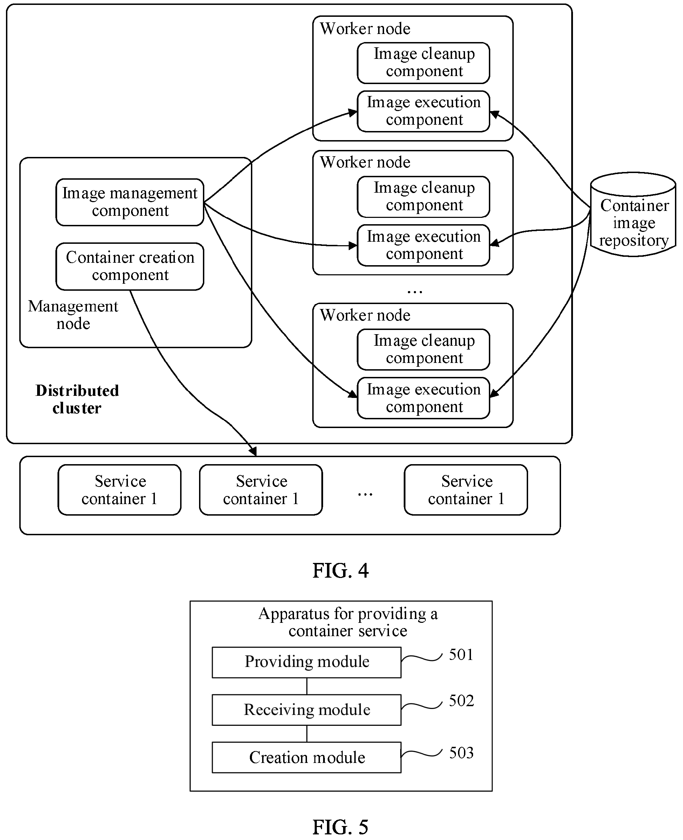

The following describes embodiments of this application by using an example with reference to a container system shown in FIG. 4.

Refer to FIG. 4. The container system includes a distributed cluster, and the distributed cluster includes a management node, a plurality of worker nodes, and a container image repository. The management node may also be referred to as a master (master) node. An image management component and a container creation component are deployed on the management node. An image cleanup component and an image execution component are deployed on each worker node. The container image repository is used to store a base image and a public image.

The image management component is configured to manage the base image and/or the public image, for example, control upgrade and release of the base image and/or the public image, and may be specifically configured to control the image execution component on each worker node. In other words, the image management component is a sender of a management command related to the base image and/or the public image, and the image execution component is an executor of the management command.

For example, the image management component is a sender of an upgrade and release instruction of the base image and/or the public image, and is configured to send the upgrade and release instruction of the base image and/or the public image. The image execution component is configured to receive the upgrade and release instruction, and execute specific behavior of the upgrade and release instruction. The image execution component is further configured to synchronize a related file in the public image to a directory of the worker node.

The image cleanup component is configured to perform aging processing on a container image on the worker node, that is, delete a container image that meets an aging condition and that is on the worker node, for example, delete a container image of an earlier version or that is not used for a long time.

The container creation component is configured to create and delete a container, and is specifically configured to: when a container is created by using a base image, mount, to the container, the file of the public image in a directory of a worker node on which the container is located, to provide a corresponding service via the container.

In some embodiments, the image management component may be represented as image-manager, the container creation component may be represented as traffic-controller, the image cleanup component may be represented as image-cleanup-operator, and the image execution component may be represented as traffic-image-operator.

It should be understood that the component names are not intended to limit functions of the components, and the components are not intended to be a unique implementation of this solution. In specific implementation, this solution may alternatively be implemented via another component or module.

In conclusion, in embodiments of this application, the container system provides the base image and the public image for users, creates the container by using the base image, and mounts the public image. The public image does not need to be downloaded, thereby reducing occupation on storage space of the node on which the container is located. In addition, the shared public image exists independently, thereby facilitating management and quick update or upgrade for the public image. Because the public image is mounted, simply updating the public image can quickly update the container created for the users. There is no need to download the public image, and the mount-based approach also makes container creation more efficiently.

FIG. 5 is a diagram of a structure of an apparatus for providing a container service according to an embodiment of this application. The apparatus may be implemented as a part or all of a compute device by using software, hardware, or a combination thereof. The compute device may be any management node or server in the foregoing method embodiments. In embodiments of this application, the apparatus is included in a container system. The container system provides a plurality of base images and a public image corresponding to the plurality of base images. The public image includes a common part of a plurality of preset images, the plurality of base images include non-common parts of the plurality of preset images, and each base image corresponds to one preset image. Refer to FIG. 5. The apparatus includes a provision module 501, a receiving module 502, and a creation module 503.

The provision module 501 is configured to provide a container image selection interface, where the container image selection interface indicates a user to select, from the plurality of base images, a base image used to create a first container;
the receiving module 502 is configured to receive an identifier of a first base image selected by the user from the container image selection interface; and
the creation module 503 is configured to: create, based on the identifier of the first base image, the first container by using the first base image, and mount the public image to the first container, where the first container is configured to provide a service for the user.

Optionally, the method is applied to a management node in the distributed cluster, and the distributed cluster further includes a plurality of worker nodes.

The creation module 503 includes:
a sending unit, configured to send a container creation instruction to a first worker node, where the container creation instruction carries the identifier of the first base image, the container creation instruction instructs the first worker node to create, based on the identifier of the first base image, the first container on the first worker node by using the first base image, and the first worker node is one of the plurality of worker nodes.

Optionally, the plurality of base images and the public image are stored in a container image repository included in the distributed cluster.

The container creation instruction further instructs, when the first worker node does not store the first base image, the first worker node to download the first base image from the container image repository based on the identifier of the first base image.

Optionally, the plurality of base images further include a user-defined image.

Optionally, the user has permission to modify a part or all of the plurality of base images.

Optionally, the provision module 501 is further configured to provide a container image download interface, where the container image download interface indicates the user to select, from the plurality of base images, a base image to be downloaded.

The receiving module 502 is further configured to receive an identifier of a second base image selected by the user from the container image download interface.

The apparatus further includes:
a download module, configured to download the second base image to a local device of the user based on the identifier of the second base image;
the provision module 501, further configured to provide a container image creation interface, where the container image creation interface indicates the user to modify the second base image; and
the receiving module 502, further configured to receive a third base image uploaded by the user from the container image creation interface, where the third base image is a base image obtained by the user by modifying the second base image.

Optionally, the user does not have permission to modify the public image.

Optionally, the provision module 501 is further configured to provide a public image update interface, where the public image update interface indicates a container service developer to update the public image.

The receiving module 502 is further configured to obtain an updated public image from the public image update interface.

Optionally, the public image is stored in the container image repository, and the apparatus further includes:
a replacement module, configured to replace the public image stored in the container image repository with the updated public image.

Optionally, the base image includes an operating system layer image and/or an engine layer image, and the public image includes a service layer image.

Optionally, the engine layer image includes an AI engine layer image.

Optionally, the public image includes one or more of a security hardening component, a remote access component, a website service component, a cloud service SDK, an encryption component, and a decryption component.

In embodiments of this application, the container system provides the base images and the public image for users, creates the container by using the base image, and mounts the public image. The public image does not need to be downloaded, thereby reducing occupation on storage space of a node on which the container is located. In addition, the shared public image exists independently, thereby facilitating management and quick update or upgrade for the public image. Because the public image is mounted, simply updating the public image can quickly update the container created for the users. There is no need to download the public image, and the mount-based approach also makes container creation more efficiently.

It should be noted that, during creating the container by the apparatus for providing a container service provided in the foregoing embodiments, division of the foregoing functional modules is merely used as an example for description. In actual application, the foregoing functions can be allocated to different functional modules and implemented based on a requirement, that is, an inner structure of an apparatus is divided into different functional modules to implement all or some of the functions described above. In addition, the apparatus for providing a container service provided in the foregoing embodiments belongs to a same concept as embodiments of the method for providing a container service. For a specific implementation process of the apparatus, refer to the method embodiments. Details are not described herein again.

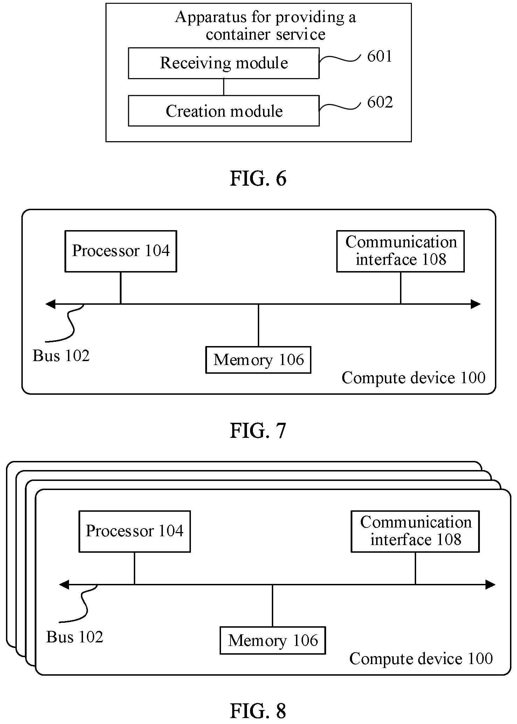

FIG. 6 is a diagram of a structure of another apparatus for providing a container service according to an embodiment of this application. The apparatus may be implemented as a part or all of a compute device by using software, hardware, or a combination thereof. The compute device may be the first worker node or the server in the foregoing method embodiments. In embodiments of this application, a container system provides a plurality of base images and a public image corresponding to the plurality of base images. The public image includes a common part of a plurality of preset images, the plurality of base images include non-common parts of the plurality of preset images, and each base image corresponds to one preset image. The container system includes a distributed cluster, and the apparatus is included in a first worker node in the distributed cluster. Refer to FIG. 6. The apparatus includes a receiving module 601 and a creation module 602.

The receiving module 601 is configured to receive a container creation instruction, where the container creation instruction carries an identifier of a first base image, and the first base image is one of the plurality of base images.

The creation module 602 is configured to: create, based on the identifier of the first base image, a first container by using the first base image, and mount the public image to the first container. The public image is a container image shared by the plurality of base images.

Optionally, the user has permission to modify a part or all of the plurality of base images, and/or the user does not have permission to modify the public image.

Optionally, the apparatus further includes:
an image cleanup module, configured to delete a container image that meets an aging condition and that is on the first worker node.

Optionally, the aging condition includes that a version of the container image is earlier than a reference version, and/or a difference between time at which the container image was last used and current time exceeds reference duration.

Optionally, the base image includes an operating system layer image and/or an engine layer image, and the public image includes a service layer image.

Optionally, the engine layer image includes an AI engine layer image.

In embodiments of this application, the container system provides the base images and the public image for users, creates the container by using the base image, and mounts the public image. The public image does not need to be downloaded, thereby reducing occupation on storage space of a node on which the container is located. In addition, the shared public image exists independently, thereby facilitating management and quick update or upgrade for the public image. Because the public image is mounted, simply updating the public image can quickly update the container created for the users. There is no need to download the public image, and the mount-based approach also makes container creation more efficiently.

It should be noted that, during creating the container by the apparatus for providing a container service provided in the foregoing embodiments, division of the foregoing functional modules is merely used as an example for description. In actual application, the foregoing functions can be allocated to different functional modules and implemented based on a requirement, that is, an inner structure of an apparatus is divided into different functional modules to implement all or some of the functions described above. In addition, the apparatus for providing a container service provided in the foregoing embodiments belongs to a same concept as embodiments of the method for providing a container service. For a specific implementation process of the apparatus, refer to the method embodiments. Details are not described herein again.

The provision module 501, the receiving module 502, the creation module 503, the receiving module 601, and the creation module 602 may all be implemented by using software, or may be implemented by sing hardware, or may be implemented by using a combination of software and hardware. For example, the following uses the creation module 503 as an example to describe an implementation of the creation module 503. Similarly, for an implementation of another module, refer to the implementation of the creation module 503.

A module is used as an example of a software functional unit, and the creation module 503 may include code that is run on a computing instance. The computing instance may include at least one of a physical host (a compute device), a virtual machine, or a container. Further, there may be one or more computing instances. For example, the creation module 503 may include code that is run on a plurality of hosts/virtual machines/containers. It should be noted that, the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Generally, one region may include a plurality of AZs.

Similarly, the plurality of hosts/virtual machines/containers configured to run the code may be distributed in a same virtual private cloud (virtual private cloud, VPC), or may be distributed in a plurality of VPCs. Generally, one VPC is configured in one region. A communication gateway needs to be configured in each VPC for communication between two VPCs in a same region and cross-region communication between VPCs in different regions. The VPCs are interconnected through the communication gateway.

A module is used as an example of a hardware functional unit, and the creation module 503 may include at least one compute device such as server. Alternatively, a module A may be a device implemented by using an application-specific integrated circuit (application-specific integrated circuit, ASIC) or a programmable logic device (programmable logic device, PLD), or the like. The PLD may be implemented by a complex programmable logic device (complex programmable logic device, CPLD), a field-programmable gate array (field-programmable gate array, FPGA), generic array logic (generic array logic, GAL), or any combination thereof.

A plurality of compute devices included in the creation module 503 may be distributed in a same region, or may be distributed in different regions. The plurality of compute devices included in the creation module 503 may be distributed in a same AZ, or may be distributed in different AZs. Similarly, a plurality of compute devices included in the module A may be distributed in a same VPC, or may be distributed in a plurality of VPCs. The plurality of compute devices may be any combination of compute devices such as a server, an ASIC, a PLD, a CPLD, an FPGA, and a GAL.

It should be noted that, in another embodiment, the creation module 503 may be configured to perform any step in the method for providing a container service, and another module such as the creation module 602 may also be configured to perform any step in the method for providing a container service. Steps that the provision module 501, the receiving module 502, the creation module 503, the receiving module 601, and the creation module 602 are responsible for implementing may be specified as required, the provision module 501, the receiving module 502, and the creation module 503, or the receiving module 601 and the creation module 602 separately implement different steps in the method for providing a container service, to implement all functions of the apparatus for providing a container service.

An embodiment of this application further provides a container system. The container system includes a management node and a worker node.

The management node is configured to implement a corresponding function of the management node in the foregoing method embodiments. The worker node is configured to implement a corresponding function of the worker node in the foregoing method embodiments.

Both the management node and the worker node may be implemented by using software, or may be implemented by using hardware. For example, the following describes an implementation of the worker node. Similarly, for an implementation of the management node, refer to the implementation of the worker node.

A module is used as an example of a software functional unit, and the worker node may include code that is run on a computing instance. The computing instance may be at least one of compute devices such as a physical host (a compute device), a virtual machine, or a container. Further, there may be one or more compute devices. For example, the worker node may include code that is run on a plurality of hosts/virtual machines/containers. It should be noted that the plurality of hosts/virtual machines/containers configured to run the application may be distributed in a same region or may be distributed in different regions. The plurality of hosts/virtual machines/containers configured to run the code may be distributed in a same AZ or may be distributed in different AZs. Each AZ includes one data center or a plurality of data centers that are geographically close to each other. Generally, one region may include a plurality of AZs.

Similarly, the plurality of hosts/virtual machines/containers configured to run the code may be distributed on a same VPC or may be distributed on a plurality of VPCs. Generally, one VPC is disposed in one region. A communication gateway needs to be configured in each VPC for communication between two VPCs in a same region and cross-region communication between VPCs in different regions. The VPCs are interconnected through the communication gateway.

A module is used as an example of a hardware functional unit, and the worker node may include at least one compute device such as server. Alternatively, the worker node may be a device implemented by using an ASIC, a PLD, or the like. The PLD may be implemented by a CPLD, an FPGA, a GAL, or any combination thereof.

A plurality of compute devices included in the worker node may be distributed in a same region, or may be distributed in different regions. The plurality of compute devices included in the worker node may be distributed in a same AZ, or may be distributed in different AZs. Similarly, the plurality of compute devices included in the worker node may be distributed in a same VPC, or may be distributed in a plurality of VPCs. The plurality of compute devices may be any combination of compute devices such as a server, an ASIC, a PLD, a CPLD, an FPGA, and a GAL.

An embodiment of this application further provides a compute device 100. As shown in FIG. 7, the compute device 100 includes a bus 102, a processor 104, a memory 106, and a communication interface 108. The processor 104, the memory 106, and the communication interface 108 communicate with each other through the bus 102. The compute device 100 may be a server or a terminal device. It should be understood that a quantity of processors and a quantity of memories in the compute device 100 are not limited in this application.

The bus 102 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one line is used to represent the bus in FIG. 7, but this does not mean that there is only one bus or only one type of bus. The bus 102 may include a path for transferring information between components (for example, the memory 106, the processor 104, and the communication interface 108) of the compute device 100.

The processor 104 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 106 may include a volatile memory (volatile memory), for example, a random access memory (random access memory, RAM). The processor 104 may further include a non-volatile memory (non-volatile memory), for example, a read-only memory (read-only memory, ROM), a flash memory, a hard disk drive (hard disk drive, HDD), or a solid-state drive (solid-state drive, SSD).

The memory 106 stores executable program code, and the processor 104 executes the executable program code to separately implement functions of the provision module 501, the receiving module 502, and the creation module 503, or the receiving module 601 and the creation module 602, so as to implement the method for providing a container service. In other words, the memory 106 stores instructions for performing the method for providing a container service.

Alternatively, the memory 106 stores executable code, and the processor 104 executes the executable code to separately implement functions of the management node, the worker node, or the server, so as to implement the method for providing a container service. In other words, the memory 106 stores instructions for performing the method for providing a container service.

The communication interface 108 implements communication between the compute device 100 and another device or a communication network by using a transceiver module, for example, but not limited to a network interface card or a transceiver.

An embodiment of this application further provides a compute device cluster. The compute device cluster includes at least one compute device. The compute device may be a server, for example, a central server, an edge server, or a local server in a local data center. In some embodiments, the compute device may alternatively be a terminal device, for example, a desktop computer, a notebook computer, or a smartphone.

As shown in FIG. 8, the compute device cluster includes at least one compute device 100. A memory 106 in one or more compute devices 100 in the compute device cluster may store same instructions for performing the method for providing a container service.

In some possible implementations, the memory 106 in the one or more compute devices 100 in the compute device cluster may alternatively separately store some instructions for performing the method for providing a container service. In other words, a combination of the one or more compute devices 100 may jointly execute instructions for performing the method for providing a container service.

It should be noted that, memories 106 in different compute devices 100 in the compute device cluster may store different instructions for respectively performing some functions of the management node, the worker node, or the server. In other words, the instructions stored in the memories 106 in different compute devices 100 may implement functions of one or more of the provision module 501, the receiving module 502, and the creation module 503, or the receiving module 601 and the creation module 602.

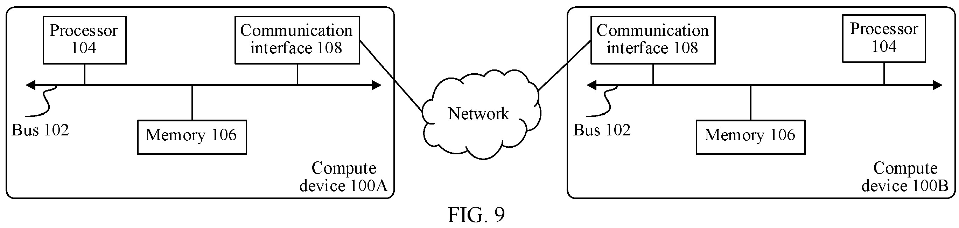

In some possible implementations, the one or more compute devices in the compute device cluster may be connected via a network. The network may be a wide area network, a local area network, or the like. FIG. 9 shows a possible implementation. As shown in FIG. 9, two compute devices 100A and 100B are connected via a network. Specifically, each compute device is connected to the network through a communication interface in the compute device. In this type of possible implementation, a memory 106 in the compute device 100A stores instructions for performing a function of the provision module 501. In addition, a memory 106 in the compute device 100B stores instructions for performing functions of the receiving module 502 and the creation module 503. Alternatively, a memory 106 in the compute device 100A stores instructions for performing a function of the receiving module 601. In addition, a memory 106 in the compute device 100B stores instructions for performing a function of the creation module 602.

For a connection mode between compute device clusters shown in FIG. 9, it may be considered that in the method for providing a container service provided in embodiments of this application, a large amount of data needs to be stored, a large amount of calculation needs to be performed, and the like, so that it is considered that the functions implemented by the receiving module 502 and the creation module 503 are performed by the compute device 100B, or the function of the creation module 602 is performed by the compute device 100B.

It should be understood that a function of the compute device 100A shown in FIG. 9 may alternatively be completed by a plurality of compute devices 100. Similarly, a function of the compute device 100B may alternatively be completed by the plurality of compute devices 100.

An embodiment of this application further provides another compute device cluster. For a connection relationship between compute devices in the compute device cluster, refer to the connection manners of the compute device cluster in FIG. 8 and FIG. 9 similarly. A difference lies in that a memory 106 in one or more compute devices 100 in the compute device cluster may store same instructions for performing the method for providing a container service.

In some possible implementations, the memory 106 in the one or more compute devices 100 in the compute device cluster may alternatively separately store some instructions for performing the method for providing a container service. In other words, a combination of the one or more compute devices 100 may jointly execute instructions for performing the method for providing a container service.

It should be noted that memories 106 in different compute devices 100 in the compute device cluster may store different instructions for performing some functions of a container system. In other words, the instructions stored in the memories 106 in different compute devices 100 may implement functions of one or more apparatuses in a management node, a worker node, and the like.

An embodiment of this application further provides a computer program product including instructions. The computer program product may be software or a program product that includes instructions and that can run on a compute device or can be stored in any usable medium. When the computer program product runs on at least one compute device, the at least one compute device is caused to perform the method for providing a container service.

An embodiment of this application further provides a computer-readable storage medium. The computer-readable storage medium may be any usable medium that can be stored in a compute device, or a data storage device like a data center, including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions, and the instructions instruct a compute device to perform the method for providing a container service.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device like a server or a data center, integrating one or more usable media. The usable medium may be a magnetic medium (for example, a floppy disk, a hard disk, or a magnetic tape), an optical medium (for example, a digital versatile disc (digital versatile disc, DVD)), a semiconductor medium (for example, a solid-state drive (solid-state disk, SSD)), or the like. It should be noted that the computer-readable storage medium mentioned in embodiments of this application may be a non-volatile storage medium. In other words, the computer-readable storage medium may be a non-transitory storage medium.

It should be understood that "at least one" mentioned in this specification refers to one or more, and "a plurality of" refers to two or more. In descriptions of embodiments of this application, "/" indicates "or" unless otherwise specified. For example, A/B may indicate A or B. In this specification, "and/or" describes only an association relationship between associated objects and indicates that three relationships may exist. For example, A and/or B may indicate the following three cases: Only A exists, both A and B exist, and only B exists. In addition, to clearly describe the technical solutions in embodiments of this application, terms such as first and second are used in embodiments of this application to distinguish between same items or similar items that provide basically same functions and purposes. A person skilled in the art may understand that the terms such as "first" and "second" do not limit a quantity or an execution sequence, and the terms such as "first" and "second" do not indicate a definite difference.

It should be noted that information (including but not limited to user equipment information, personal information of a user, and the like), data (including but not limited to data used for analysis, stored data, displayed data, and the like), and signals in embodiments of this application are used under authorization by the user or full authorization by all parties, and collection, use, and processing of related data need to conform to related laws, regulations, and standards of related countries and regions.

The foregoing descriptions are merely embodiments of this application, but are not intended to limit this application. Any modification, equivalent replacement, or improvement made without departing from the spirit and principle of this application should fall within the protection scope of this application.

## Claims

1. A method for providing a container service, applied to a container system, wherein the container system provides a plurality of base images and a public image corresponding to the plurality of base images, the public image comprises a common part of a plurality of preset images, the plurality of base images comprise non-common parts of the plurality of preset images, and each base image corresponds to one preset image; and the method comprises:
providing a container image selection interface, wherein the container image selection interface indicates a user to select, from the plurality of base images, a base image used to create a first container;
receiving an identifier of a first base image selected by the user from the container image selection interface; and
creating, based on the identifier of the first base image, the first container by using the first base image, and mounting the public image to the first container, wherein the first container is configured to provide a service for the user.

2. The method according to claim 1, wherein the container system comprises a distributed cluster, the method is applied to a management node in the distributed cluster, and the distributed cluster further comprises a plurality of worker nodes; and
the creating, based on the identifier of the first base image, the first container by using the first base image comprises:
sending a container creation instruction to a first worker node, wherein the container creation instruction carries the identifier of the first base image, the container creation instruction instructs the first worker node to create, based on the identifier of the first base image, the first container on the first worker node by using the first base image, and the first worker node is one of the plurality of worker nodes.

3. The method according to claim 2, wherein the plurality of base images and the public image are stored in a container image repository comprised in the distributed cluster; and
the container creation instruction further instructs, when the first worker node does not store the first base image, the first worker node to download the first base image from the container image repository based on the identifier of the first base image.

4. The method according to any one of claims 1 to 3, wherein the plurality of base images further comprise a user-defined image.

5. The method according to any one of claims 1 to 4, wherein the user has permission to modify a part or all of the plurality of base images.

6. The method according to claim 5, wherein the method further comprises:
providing a container image download interface, wherein the container image download interface indicates the user to select, from the plurality of base images, a base image to be downloaded;
receiving an identifier of a second base image selected by the user from the container image download interface;
downloading the second base image to a local device of the user based on the identifier of the second base image;
providing a container image creation interface, wherein the container image creation interface indicates the user to modify the second base image; and
receiving a third base image uploaded by the user from the container image creation interface, wherein the third base image is a base image obtained by the user by modifying the second base image.

7. The method according to any one of claims 1 to 6, wherein the user does not have permission to modify the public image.

8. The method according to any one of claims 1 to 7, wherein the method further comprises:
providing a public image update interface, wherein the public image update interface indicates a container service developer to update the public image; and
obtaining an updated public image from the public image update interface.

9. The method according to claim 8, wherein the public image is stored in the container image repository, and the method further comprises:
replacing the public image stored in the container image repository with the updated public image.

10. The method according to any one of claims 1 to 9, wherein the base image comprises an operating system layer image and/or an engine layer image, and the public image comprises a service layer image.

11. The method according to any one of claims 1 to 10, wherein the engine layer image comprises an artificial intelligence AI engine layer image.

12. The method according to any one of claims 1 to 11, wherein the public image comprises one or more of a security hardening component, a remote access component, a website service component, a cloud service software development kit SDK, an encryption component, and a decryption component.

13. A method for providing a container service, wherein a container system provides a plurality of base images and a public image corresponding to the plurality of base images, the public image comprises a common part of a plurality of preset images, the plurality of base images comprise non-common parts of the plurality of preset images, each base image corresponds to one preset image, the container system comprises a distributed cluster, and the method is applied to a first worker node in the distributed cluster; and the method comprises:
receiving a container creation instruction, wherein the container creation instruction carries an identifier of a first base image, and the first base image is one of the plurality of base images; and
creating, based on the identifier of the first base image, a first container by using the first base image, and mounting the public image to the first container, wherein the first container is configured to provide a service for a user.

14. The method according to claim 13, wherein the user has permission to modify a part or all of the plurality of base images, and/or the user does not have permission to modify the public image.

15. The method according to claim 13 or 14, wherein the method further comprises:
deleting a container image that meets an aging condition and that is on the first worker node.

16. The method according to claim 15, wherein the aging condition comprises that a version of the container image is earlier than a reference version, and/or a difference between time at which the container image was last used and current time exceeds reference duration.

17. The method according to any one of claims 13 to 16, wherein the base image comprises an operating system layer image and/or an engine layer image, and the public image comprises a service layer image.

18. The method according to claim 17, wherein the engine layer image comprises an artificial intelligence AI engine layer image.

19. An apparatus for providing a container service, wherein the apparatus is comprised in a container system, the container system provides a plurality of base images and a public image corresponding to the plurality of base images, the public image comprises a common part of a plurality of preset images, the plurality of base images comprise non-common parts of the plurality of preset images, and the apparatus comprises:
a provision module, configured to provide a container image selection interface, wherein the container image selection interface indicates a user to select, from the plurality of base images, a base image used to create a first container;
a receiving module, configured to receive an identifier of a first base image selected by the user from the container image selection interface; and
a creation module, configured to: create, based on the identifier of the first base image, the first container by using the first base image, and mount the public image to the first container, wherein the first container is configured to provide a service for the user.

20. An apparatus for providing a container service, wherein a container system provides a plurality of base images and a public image corresponding to the plurality of base images, the public image comprises a common part of a plurality of preset images, the plurality of base images comprise non-common parts of the plurality of preset images, the container system comprises a distributed cluster, and the apparatus is comprised in a first worker node in the distributed cluster; and the apparatus comprises:
a receiving module, configured to receive a container creation instruction, wherein the container creation instruction carries an identifier of a first base image, and the first base image is one of the plurality of base images; and
a creation module, configured to: create, based on the identifier of the first base image, a first container by using the first base image, and mount the public image to the first container, wherein the first container is configured to provide a service for a user.

21. A container system, wherein the container system is configured to implement the method according to any one of claims 1 to 18.

22. A compute device, wherein the compute device comprises a processor and a memory, wherein
the processor is configured to execute instructions stored in the memory, to cause the compute device to perform steps of the method according to any one of claims 1 to 18.

23. A compute device cluster, comprising at least one compute device, wherein each compute device comprises a processor and a memory; and
a processor of the at least one compute device is configured to execute instructions stored in a memory of the at least one compute device, to cause the compute device cluster to perform steps of the method according to any one of claims 1 to 18.

24. A computer-readable storage medium, wherein the storage medium stores a computer program; and when the computer program is executed by a processor, the method according to any one of claims 1 to 18 is implemented.

25. A computer program product, wherein the computer program product stores computer instructions; and when the computer instructions are executed by a processor, steps of the method according to any one of claims 1 to 18 are implemented.
